(19) Europäisches Patentamt
European Patent Office
Office européen des brevets

(11) Veröffentlichungsnummer: **0 422 455 A2**

# (12) EUROPÄISCHE PATENTANMELDUNG

(21) Anmeldenummer: **90118628.8**

(22) Anmeldetag: **28.09.90**

(51) Int. Cl.5: **C08L 67/06**, C08L 63/10, C08K 3/36, C08K 5/01

(30) Priorität: **09.10.89 DE 3933656**

(43) Veröffentlichungstag der Anmeldung: **17.04.91 Patentblatt 91/16**

(84) Benannte Vertragsstaaten: **AT BE CH DE DK ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Zwecker, Joachim, Dr.**
**Moltkestrasse 18**
**W-6940 Weinheim(DE)**
Erfinder: **Schreiner, Holger**
**Kloster-Rosenthal-Strasse 8**
**W-6719 Goellheim(DE)**

## (54) Verdungstungsarme Polyesterharze.

(57) Die Erfindung betrifft verdunstungsarme, lagerstabile ungesättigte Polyesterharze, die einem ethylenisch ungesättigten Polyester, Styrol als Comonomeres, Paraffine zur Verhinderung der Styrolverdunstung, sowie eine pyrogene Kieselsäure, die sowohl hydrophile als auch hydrophobe Endgruppen aufweist, enthalten.

EP 0 422 455 A2

## VERDUNSTUNGSARME POLYESTERHARZE

Die Erfindung betrifft verdunstungsarme, lagerstabile ungesättigte Polyesterharze, die einen ethylenisch ungesättigten Polyester, Styrol als Comonomers, Paraffine zur Verhinderung der Styrolverdunstung, sowie pyrogene Kieselsäure enthalten.

Es ist bekannt, daß auf flüssigen Polyesterharzen einen dünnen Film bilden können, welcher die Verdunstung des Comonomeren Styrol vermindert. Eine optimale Kombination von Parraffinen ist in EP-A 941 offenbart. Die dort beschriebenen Polyesterharze zeichnen sich außer der geringen Styrolverdunstung auch durch eine gute Überlaminierbarkeit aus, d.h. durch eine ausreichende Haftung mehrerer Lagen von Harzlaminaten.

Zur Herstellung verdunstungsarmer Harze werden die Paraffine üblicherweise in die flüssigen Harze eingerührt. Sie werden dabei in feinverteilter Form im Harz dispergiert; die an der Oberfläche befindlichen Paraffin-Teilchen stellen dabei eine sehr dünne Schicht dar, die sich bei Veränderungen der Oberfläche, z.B. durch Rühren oder Umfüllen des Harzes immer wieder neu bildet.

Es hat sich nun gezeigt, daß diese Dispersion des Paraffins im Harz nicht stabil ist, im Laufe einiger Tage oder Wochen entmischt sich die Dispersion und die Paraffine schwimmen aufgrund ihres geringeren spezifischen Gewichts auf und bilden eine dicke Oberflächenschicht. Bei Veränderungen der Harzoberfläche geht dann die Wirkung des Paraffins als Verdunstungschemmer verloren.

Es ist weiter bekannt, daß hydrophile Kieselsäuren, wenn man sie in Mengen von 1 bis 2 % Polyesterharzen zusetzt, diesen thixotrope Eigenschaften verleiht. Das heißt, daß die Harze im Ruhezustand hochviskos, bei Scherbeanspruchung aber niedrigviskos und damit verarbeitbar sind. Ein Nebeneffekt des Kieselsäurezusatzes besteht darin, daß bei den hochviskosen Harze die oben beschriebene Entmiscchung von Harz und Parrafin nicht eintritt, das heißt, thixotropierte Harze sind bezüglich des verdunstungshemmenden Parrafinzusatzes lagerstabil. Bei vielen Anwendungswekken, z.B. bei Wickelharzen, ist jedoch eine Thixotropie unerwünscht.

Bei Vinylsterharzen war es bisher praktisch nicht möglich, durch Paraffin-Zusatz die Styrolverdunstung zu vermindern, da die Entmischung dort eher rasch erfolgt.

Der Erfindung lag also die Aufgabe zugrunde, nicht thixotropierte verdunstungsarme ungesättigte Polyesterharze zu entwickeln, die auch nach mehreren Monaten ihre günstigen Eigenschaften nicht verlieren, bei denen also die Dispersion des verdunstungsmindernden Paraffinzusatzes im Polyesterharz auch nach längerem Lagern noch erhalten bleibt.

Diese Aufgabe wird erfindungsgemäß dadurch gelöst, daß man einem Harz, enthaltend

A. einen ethylenisch ungesättigten Polyester,

B. Styrol,

C. Paraffinen 0,004 bis 0,4 Gew.-%, bezogen auf A + B, einer pyrogenen Kieselsäure D zusetzt, die sowohl hydrophile Si-OH als auch hydrophobe Si-R Endgruppen enthält.

In GB-A 2 182 341 sind ungesättigte Polyesterharze beschrieben, die zur Unterdrückung der Styrolemission wachsartige Substanzen und zur Thixotropierung hydrophile pyrogene Kieselsäuren enthalten, sowie darüber hinaus 0,01 bis 2,5 % einer hydrophoben Kieselsäure, welche als Adhäsionspromotor zur Verbesserung der Laminierbarkeit wirken soll. Wenn man nun - ausgehend von dem gemeinsamen Zusatz hydrophile und hydrophober Kieselsäure nach GB 2 182 341 - den Gehalt an Kieselsäure soweit verringert, daß praktisch kein Thixotropieeffekt mehr auftritt, so ist doch das Ziel der vorliegenden Erfindung nicht erreicht. Es zeigt sich nämlich, daß die Kieselsäuren in dem Harz sich langsam absetzen, so daß der stabilisierende Effekt auf die Paraffindispersion verloren geht. Das heißt daher, daß die gewünschte Lagerstabilität nicht erreicht wird. Der gleiche Effekt wird übrigens auch dann beobatchet, wenn man rein hydrophile bzw. rein hydrophobe Kieselsäure allein in geringen Mengen zusetzt.

Zu den einzelnen Komponenten ist folgendes zu sagen:

### A. Ungesättigte Polyester

Ungesättigte Polyester A sind die üblichen Kondensationsprodukte aus mehrwertigen, insbesondere zweiwertigen Carbonsäuren und deren veresterbaren Derivaten, insbesondere deren Anhydriden und mehrwertigen, insbesondere zweiwertigen Alkoholen, die gegebenenfalls zusätzlich Reste einwertiger Carbonsäuren, einwertiger Alkohole oder Reste von Hydroxycarbonsäuren enthalten, wobei zumindest ein Teil der Reste über ethylenisch ungesättigte copolymerisierbare Gruppen verfügen muß. Als mehrwertige, insbesondere zweiwertige, gegebenenfalls ungesättigte Alkohole eignen sich die üblichen insbesondere acyclische Gruppen, cyclische Gruppen als auch beide Arten von Gruppen aufweisende Alkandiole und Oxaalkandiole, wie z.B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol,

Cyclohexandiol-1,2, 2,2-Bis-(p-hydroxycyclohexyl)-propan, Trimethylolpropanmonoallylether oder Butandiol-1,4.

Ferner können ein-, drei- oder höherwertige Alkohole, wie z.B. Ethylhexanol, Fettalkohole, Benzylalkohole, 1,2-Di-(allyloxy)-propanol-3, Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäuren bzw. deren Derivate sind zweibasische olefinisch ungesättigte, vorzugsweise $\alpha,\beta$-olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z.B. Bernsteinsäure, Glutarsäure, O-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z.B. Ethylenhexansäure, Fettsäuren, Methacrylsäure, Propionsäure, Benzoesäure, 1,2,4-Benzoltricarbonsäure oder 1,2,4,5-Benzoltetracarbonsäure. Vorzugsweise verwendet werden Maleinsäure bzw. deren Anhydrid und Fumarsäure.

Das Molverhältnis von ungesättigten zu gesättigten Dicarbonsäuren liegt vorzugsweise zwischen 1:0 und 1:2,5.

Gemische ungesättigter Polyester, darunter auch solche, die Styrol nur beschränkt löslich sind und leicht kristallisieren, können ebenfalls vorteilhaft eingesetzt werden. Solche leicht kristallisierenden ungesättigten Polyester können z.B. aus Fumarsäure, Adipinsäure, Terephthalsäure, Ethylenglykol, Butandiol-1,4, Hexandiol-1,6 und Neopentylglykol aufgebaut sein.

Geeignet sind auch ungesättigte Polyester mit vorzugsweise endständigen Doppelbindungen.

Die ungesättigten Polyester besitzen Säurezahlen von 0,5 bis 100, vorzugsweise von 2 bis 30 und mittlere Molekulargewichte von ungefähr 800 bis 6000, vorzugsweise von etwa 1000 bis 4000.

Die amorphen und gegebenenfalls kristallisierbaren ungesättigten Polyester werden im allgemeinen durch Schmelzkondensation oder Kondensation unter azeotropen Bedingungen bei Temperaturen zwischen 150 und 220 °C aus ihren Ausgangskomponenten nach kontinuierlichen oder diskontinuierlichen Verfahren hergestellt.

Ebenfalls geeignet sind ungesättigte Polyester, die mit Cyclopenten-oder Cyclohexengruppen modifiziert sind.

Von dem Begriff ungesättigte Polyester im Sinne der Erfindung sind auch Vinylester mit umfaßt.

Unter Vinylestern versteht man gemeinhin Umsetzungsprodukte von Polyepoxiden mit ungesättigten Monocarbonsäuren, vorzugsweise Methacrylsäure. Auch diese Produkte werden in ungesättigten Monomeren, vorzugsweise Styrol, gelöst. Diese Harze werden beispielsweise in den US-PS 3 066 112 und 3 179 623 beschrieben, wobei bevorzugt Vinylesterharze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.

Kennzeichnend für die Klasse der Vinylesterharze ist die Gruppe

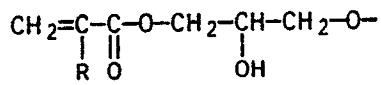

mit R = H oder $CH_3$.

Die zur Herstellung der Vinylester verwendeten Epoxidharze leiten sich von mehrwertigen Phenolen und Alkoholen ab. Die Epoxidäquivalentgewichte können zwischen 60 und 2000 liegen. Die Synthese der Epoxidharze erfolgt durch Umsetzung der mehrwertigen Phenole und Alkohole mit Epichlorhydrin und anschließender Dehydrochlorierung mit Natronlauge. Die genauen Herstellbedingungen sowie typische Vertreter aus der Klasse der Epoxidharze werden z.B. im "Handbook of Epoxy Resins" von Henry Lee und Kris Neville, Mc Graw-Hill, 1967, beschrieben.

Bevorzugte Epoxidharze sind die Glycidylether auf Basis von Bisphenol A mit Epoxidäquivalentgewichten von 140 bis 1000. Als weitere Gruppe von Polyepoxiden kommen solche auf Basis von kernhydriertem Bisphenol A und Bisphenol F, 2,2-Bis-(4-hydroxycyclohexyl)propan bzw. Bis-(4-hydroxycyclohexyl)methan, sowie epoxidierte Cycloolefine in Frage. Weiterhin stellen Polyglycidylether von Novolakharzen eine wichtige Gruppe von Epoxidharzen dar. Darunter fallen die Kondensationsprodukte von Phenol oder Kresol mit Aldehyden wie Formaldehyd oder Butyraldehyd ebenso wie Additionsprodukte von Phenol oder substituierten Phenolen mit Olefinen wie Dicyclopentadien, Isopren oder Norbornen. Weiterhin zählen zur Gruppe der bevorzugten Epoxidharze solche, die sich von Alkylenpolyphenolen ableiten, wie z.B. Bis-(4-hydroxyphenyl)-methan, 1,1,2,2-Tetrakis-(4-hydroxyphenyl)ethan oder 1,1,3-Tris-(4-hydroxyphenyl)propan.

Beispielhaft für Epoxidharze auf Basis mehrwertiger aliphatischer Alkohole seien genannt die Polyglycidylether von 1,4-Butandiol, 1,6-Hexandiol, Trimethylolpropan und Poly-THF.

Unter ungesättigten Monocarbonsäuren versteht man $\alpha,\beta$-ungesättigte Carbonsäuren wie Acrylsäure oder Methacrylsäure sowie die Halbester von ungesättigten Dicarbonsäuren. Besonders bevorzugt ist Methacrylsäure. Die Umsetzung der Epoxidharze mit der ungesättigten Monocarbonsäure wird ohne Katalysatoren oder in Gegenwart von Lewisbasen wie beispielsweise tertiären Aminen, Triarylphosphinen, Acetaten oder Alkoholaten sowie Ammonium- und Phosphoniumhalogeniden bei Temperaturen von 60 bis 130 °C in Gegenwart eines inerten Lösungsmittels oder in der Schmelze durchgeführt. Dabei werden pro Epoxidgruppe von 0,6 bis 1,1 Äquivalente der ungesättigten Monocarbonsäure verwendet.

B. Monomere

Die ungesättigten Polyesterharze enthalten als Monomeres Styrol. Das Verhältnis Polyester:Styrol liegt dabei vorzugsweise zwischen 20:80 und 90:10, insbesondere zwischen 50:50 und 75:25. Styrol als Comonomeres kann teilweise durch andere übliche ethylenisch polymerisierbare Monomere ersetzt werden, z.B. Vinylverbindung, wie substituierte Styrole, Ester der Acryl- und Methacrylsäure oder Allylverbindungen, wie Diallylphthalat.

C. Als Paraffine sind die üblichen höheren Kohlenwasserstoffe geeignet, und zwar sowohl feste; wachsartige Substanzen als auch flüssige Paraffinöle. Bevorzugt sind Mischungen aus Paraffinen mit einem Schmelzpunkt zwischen 25 °C und 50 °C und solchen mit einem Schmelzpunkt zwischen 51 °C und 100 °C, wie in EP-A 941 beschrieben. Auch Mischungen mit Paraffinölen sind geeignet, wodurch die Verträglichkeit mit dem Polyesterharz erhöht wird. Besonders bevorzugt sind Gemische aller drei genannten Paraffine im Verhältnis von etwa 1:1:1.

Die Komponente C ist im Harz vorzugsweise in Mengen von 0,01 bis 2 Gew.-%, insbesondere von 0,05 bis 0,5 Gew.-%, bezogen auf A+B, enthalten.

D. Das Harz enthält erfindungsgemäß 0,004 bis 0,4 Gew.-%, vorzugsweise 0,01 bis 0,1 Gew.-% einer pyrogenen Kieselsäure, die sowohl hydrophile Si-OH als auch hydrophobe Si-R Endgruppen aufweist. R ist dabei $C_1$-$C_4$-Alkyl, vorzugsweise Methyl. Die Endgruppen bestehen dabei vorzugsweise zu 10-90 %, insbesondere zu 25-70 %, aus Si-OH-Gruppen und zu 90-10 %, insbesondere zu 75-25 % aus Si-R-Gruppen. Das Verhältnis Si-OH zu SiR-Gruppen läßt sich mit üblichen analytischen Methoden, z.B. spektroskopisch oder durch quantitative chemische Endgruppenanalyse bestimmen. Die Kieselsäuren mit den verschiedenartigen Endgrupen können z.B. durch gezielten Zusatz von Dichlordimethylsilan bei der Herstellung der pyrogenen Kieselsäure erhalten werden. Ein geeignetes Handelsprodukt, das die geforderten Eigenschaften aufweist, ist z.B. Aerosil R 974 der Firma DEGUSSA mit einem Verhältnis hydrophile zu hydrophobe Endgruppen von etwa 50:50.

Neben den Komponenten C und D können die erfindungsgemäßen Harze noch die üblichen Zusatzstoffe enthalten, z.B.

Verstärkungsfasern, z.B. Glas- und Kohlenstoff-Fasern Füllstoffe, z.B. Kreide, Quarz, Aluminiumoxidhydrat, Inhibitoren, z.B. Hydrochinon

Polyfunktionelle Hydroxylverbindungen, z.B. Ethylenglykol, Trimehtylolpropan,

Gleitmittel wie z.B. Wachse Flammschutzmittel, insbesondere Halogenverbindungen. Eindickmittel, wie Oxide oder Hydroxide des Lithiums, Magnesiums, Calciums, Aluminiums oder Titans Eindikkungsbeschleuniger, z.B. Ammoniumchloride, Phosphoniumchloride, Sulfoniumhalogenide, Wasser, Polyole oder Propandiol-1,2.

Härtungsbeschleuniger, z.B. Metallkomplexe oder aromatische Amine.

Bei thixotropierten Polyesterharzen ist die Anwendung der Erdingung nicht sinnvoll, der Thixotropieindex der Harze (nach Brookfield RVT) liegt daher zweckmäßigerweise unter 1,5, vorzugsweise bei etwa 1.

Das Einarbeiten der Komponenten C und D sowie gegebenenfalls der anderen Zusatzstoffe in das Harz erfolgt nach üblichen Methoden, z.B. durch Einrühren.

Die erfindungsgemäßen Polyesterharze können nach bekannten Methoden weiterverarbeitet werden, wobei die geringe Styrolverdunstung von großem Vorteil ist.

Die in den Beispielen genannten Teile und prozente beziehen sich auf das Gewicht.

Beispiel 1

Ein ungesättigter Polyester wurde hergestellt durch Polykondensation von 1 Teil orthophthalsäure, 2 Teilen Maleinsäureanhydrid und 3 Teilen Propylenglykol.

Der Polyester wies eine Säurezahl von 30 auf. Er wurde 67%ig in Styrol gelöst, das erhaltene Harz hatte eine Viskosität bei 23 °C von 1000

mPa.s.

Diesem Harz wurden 0,4 % eines Paraffingemisches (1/3 Paraffin mit Schmelzpunkt 47° C, 1/3 Paraffin mit Schmelzpunkt 570° C, 1/3 Paraffinöl), sowie 0,04 % Aerosil® 974 zugesetzt.

Gemessen wurde sowohl an dem Polyesterharz ohne Zusatz als auch an dem erfingungsgemäßen Harz die Styrolemission bei 23° C (100 g Harz auf einer Fläche von 15 x 15 $cm^2$ verteilt, keine Luftbewegung)

Harz ohne Zusatz : 60 g • $m^{-2}$ • $h^{-1}$

erfindungsgemäßes Harz : 4 g • $m^2$ • $h^{-1}$

Die geringe Styrolemission bei dem erfindungsgemäßen Harz wird auch bei einer Lagerung von drei Monaten noch gefunden.

Beispiel 2

Ein Vinylesterharz hergestellt durch Umsetzung von 3,8 Teilen Bisphenol A-diglycidether mit 1,7 Teilen Methacrylsäure.

Dieses Umsetzungsprodukt wurde 60 %-ig in Styrol gelöst. Das Harz wies dann eine Viskosität bei 23° C von 470 mPa.s auf. In das Harz wurden 0,8 % des Paraffingemisches nach Beispiel 1 und 0,08 % Aerosil R 974 eingerührt.

Styrolemission:

Harz ohne Zusatz : 85 g • $m^2$ • $h^{-1}$

erfindunsgemäßes Harz : 1 g • $m^{-2}$ • $h^{-1}$

(auch nach 3 Monaten noch unverändert).

## Ansprüche

1. Verdunstungsarme ungesättigte Polyesterharze, enthaltend

A. einen ethylenisch ungesättigten Polyester,

B. Styrol,

C. Paraffine,

D. pyrogene Kieselsäure,

dadurch gekennzeichnet, daß sie als Komponente D 0,004 bis 0,4 Gew.-%, bezogen auf A + B, einer Kieselsäure enthält, die sowohl hydrophile Si-OH- als auch hydrophobe Si-R-Endgruppen aufweist, wobei R ein $C_1$-$C_4$-Alkylrest ist.

2. Polyesterharze nach Anspruch 1, dadurch gekennzeichnet, daß sie 0,01 bis 2 Gew.-%, bezogen auf A + B, der Paraffine C enthalten.

3. Polyesterharze nach Anspruch 1, dadurch gekennzeichnet, daß die Komponente C ein bei Raumtemperatur festes Paraffin und ein bei Raumtemperatur flüssiges Paraffinöl enthält.

4. Polyesterharze nach Anspruch 1, dadurch gekennzeichnet, daß die Komponente C ein Paraffin mit einem Schmelzpunkt zwischen 25° C und 50° C und ein Paraffin mit einem Schmelzpunkt zwischen 51° C und 100° C enthält.

5. Polyesterharze nach Anspruch 1, dadurch gekennzeichnet, daß die Endgruppen der Kieselsäure D zu 10-90 % aus hydrophilen Si-OH-Gruppen und zu 90-10 % aus hydrophoben Si-$CH_3$-Gruppen bestehen.